# EUROPEAN PATENT APPLICATION

(11) **EP 3 258 372 A1**
(43) Date of publication of application: **20.12.2017**
(21) Application number: 15793669.1
(22) Date of filing: 07.08.2015
(51) Int. Cl.: G06F 9/445, G06F 11/10

(54) **BURNING METHOD AND BURNING SYSTEM**

(30) Priority: 11.02.2015 CN 201510072458
(71) Applicant: BOE Technology Group Co., Ltd., Beijing 100015 (CN); Beijing BOE Multimedia Technology Co., Ltd., Beijing 100015 (CN)
(72) Inventor: TANG, Jinchao, Beijing 100176 (CN); XU, Wanli, Beijing 100176 (CN); WANG, Xufeng, Beijing 100176 (CN)
(74) Representative: Gesthuysen Patent- und Rechtsanwälte
(86) International application number: PCT/CN2015/086362
(87) International publication number: WO 2016/127606

(57) **Abstract**

The present invention provides a method for burning device keys, wherein the method for burning comprises the steps of: step a: computing device keys to be sent at an operating device end to obtain a first verification code; step b: sending the device keys to be sent to a receiving device end, and controlling the receiving device end to store the received device keys into the receiving device end; step c: controlling the receiving device end to compute the received device keys to obtain a second verification code; step d: comparing the first verification code with the second verification code; step e: finishing the burning method when the first verification code matches the second verification code, and performing the steps b, c, d and e again when the first verification code does not match the second verification code. The present invention also provides a burning system. The burning method of the present invention can ensure that the device keys are successfully burnt at the receiving device end to guarantee the yield rate of the receiving device.

## Description

### FIELD OF THE INVENTION

The present invention relates to the field of display device manufacturing, and more particularly to a method for burning secret keys at a receiving device end and a burning system for performing the burning method.

### BACKGROUND OF THE INVENTION

With the rapid development of display technologies, more requirements are set for powerful functions and more data needs to be transmitted. In the prior art, a high definition multimedia interface (HDMI) is required for data transmission. HDMI, a high definition digital interface standard, is able to provide a high-speed wideband for transmitting digital video and audio signals lossless. High-bandwidth Digital Content Protection (HDCP) is in need for transmitting data by HDMI, wherein the HDCP technology is a decoding technology developed by Intel for providing high-bandwidth digital content protection to HDMI. The HDMI with HDCP technology can receive high definition signals in all formats without being subject to signal encryption restrictions. HDCP is an encryption technology that prevents piracy of digital contents. If either software or hardware does not support HDCP, it is unable to read the transmitted digital contents.

All devices in support of HDCP have a set of particular secret keys. Generally speaking, a set of secret keys includes forty 56-bit keys. Any HDCP device must have a set of unique device keys. A manufacturer needs to purchase device keys from a Digital-CP organization when producing display devices and must ensure that each display device uses a unique device key when manufacturing a display device. The circumstance of one device key being used by several devices should be forbidden. The manufacturer burns the purchased device key into a display terminal interface's memory so as to provide the display terminal with a HDCP function.

At present, a method for burning a HDCP device key having about 300 bits is to use a specialized burning tool equipped for a computer to burn the device key into a single memory at one time. Since a HDCP device key having about 300 bits is to be burnt by a computer, data gets lost easily during the burning process, which is disadvantageous to the integrity of the authorized burning.

According to the technologies in the past, an independent workstation is used on the production line of display panel packaging workshop to burn the HDCP device key. The working principle of such a burning method is to connect the display devices to be burned by a plurality of signal lines, manage the HDCP device key by a computer, transmit HDCP data via serial ports or DDC channels to LCD terminal processing chips according to DDC/CI communication protocols, and write the HDCP device key by the processing chips in the display devices. The operators on the production lines need to connect the signal lines to the display devices, click to run the burning program in the computer after the signals are stable, pull out the signal lines after the burning is done, and then send the readily burned display devices to the next step.

Since the workshops are in a bad environment and on-line burning is subject to environmental influences, burning tends to be not that good; and HDCP burning stations work independently, which does not facilitate management of HDCP device keys and whether the burning process is accurately performed, resulting in that burning failure may not be detected.

### SUMMARY OF THE INVENTION

The summary of the invention is provided in order to selectively introduce the concepts that will be further described in the following embodiments in a simplified form. The summary of the invention is neither intended to identify key features or essential features of claimed subject matters, nor to limit the scope of the claimed subject matters. In addition, the claimed subject matters are not limited to embodiments that solve any or all defects mentioned in any part of the disclosure.

The object of the present invention is to provide a method for burning device keys and a burning system for performing the burning method. Burning failure may be avoided by using the burning method to burn the device keys at a receiving device end.

To this end, as one aspect of the present invention, a method for burning device keys is provided, wherein the method for burning comprises the steps of:
step a: computing device keys to be sent at an operating device end to obtain a first verification code;
step b: sending the device keys to be sent to a receiving device end, and controlling the receiving device end to store the received device keys into the receiving device end;
step c: controlling the receiving device end to compute the received device keys to obtain a second verification code;
step d: comparing the first verification code with the second verification code;
step e: finishing the burning method when the first verification code matches the second verification code, and performing the steps b, c, d and e again when the first verification code does not match the second verification code.

As another aspect of the present invention, there is provided a burning system including an operating device end and a receiving device end and the burning system is used for burning device keys, wherein the burning system comprises:
a first computation module arranged at the operating device end and used for computing device keys to be sent at the operating device end to obtain a first verification code;
a control module arranged at the operating device end and used for controlling the computation of the received device keys at the receiving device end to obtain a second verification code;
a first communication module arranged at the operating device end and used for sending the device keys to be sent at the operating device end to a chip to be burnt at the receiving device end; and
a comparison module capable of comparing the first verification code with the second verification code and generating a comparison result, and when the comparison result indicates that the first verification code does not match the second verification code, the comparison module sending a reset signal to the control module which generates a reset instruction according to the reset signal so as to control the first communication module to send the device keys again to the receiving device end.

It can thus be seen that the burning method of the present invention can ensure that the device keys are successfully burnt at the receiving device end to guarantee the yield rate of the receiving device.

### BRIEF DESCRIPTION OF DRAWINGS

The drawings are provided for further understanding of the present invention and used, as a part of the description, to explain the present invention in combination with the following embodiments, but are not intended to impose any limitations on the present invention, wherein
Fig. 1 is a flow chart of a burning method according to an embodiment of the present invention;
Fig. 2 is a further flow chart showing the step of comparing a first verification code with a second verification code according to an embodiment of the present invention; and
Fig. 3 is a diagram of a burning system according to an embodiment of the present invention.

### DETAILED DESCRIPTION OF THE INVENTION

The embodiments of the present invention will be explained in detail with reference to the drawings. It shall be understood that the specific implementations described herein are used for explaining and interpreting the present invention, rather than limiting the present invention.

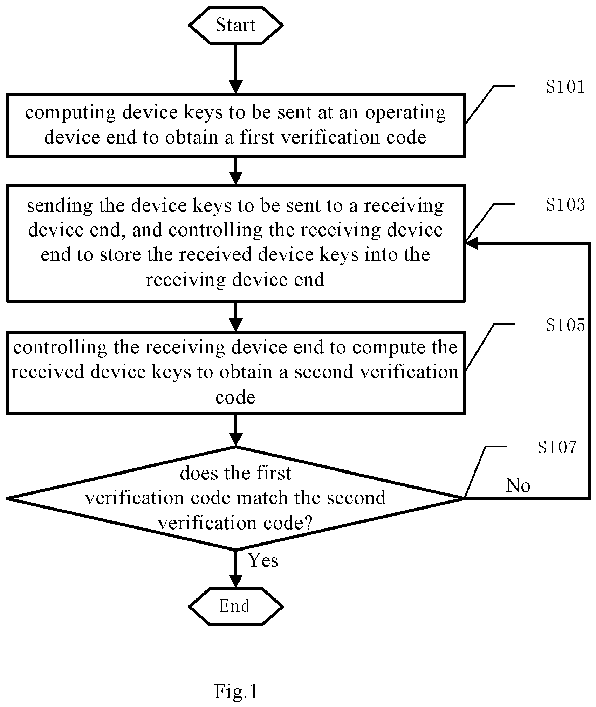

As shown in Fig. 1, as an aspect of the present invention, there is provided a method for burning device keys, wherein the method for burning comprises the steps of:
in step S101, computing device keys to be sent at an operating device end to obtain a first verification code;
in step S103, sending the device keys to be sent to a receiving device end, and controlling the receiving device end to store the received device keys into the receiving device end;
in step S105, controlling the receiving device end to compute the received device keys to obtain a second verification code;
in step S107, comparing the first verification code with the second verification code;
when the first verification code matches the second verification code, the burning method finishes and the burning is done so that the burning at the next receiving device can be performed by the same method. When the first verification code does not match the second verification code, go back to step S103.

In the present invention, there are two circumstances where the first verification code matches the second verification code:
the first one is that when the computation of the device keys to be sent at the operating device end is the same as that of the received device keys at the receiving device end, the matching of the first verification code to the second verification code means that the first verification code is identical with the second verification code;
the second one is that when the computation of the device keys to be sent at the operating device end is different from that of the received device keys at the receiving device end, the matching of the first verification code to the second verification code means that if the device keys to be sent are computed at the operating device end by a way identical with "the computation of the received device keys at the receiving device end", a verification code that is identical with the second verification code can be obtained. It can be understood as that the first verification code can be obtained by performing a first computation of the device keys to be sent at the operating device end; and the second verification code can be obtained by performing a second computation of the received device keys at the receiving device end; by performing different computations, if the verification code obtained by performing a second computation of the device keys to be sent at the operating device end is identical with the second verification code, it means that the first verification code matches the second verification code. In such cases a suitable matching method can be selected according to actual conditions, thereby reducing the calculation amount.

If the first verification code matches the second verification code, it indicates that no data get lost during the transmission of the device keys and accordingly the device keys are burnt at the receiving device end correctly. If the first verification code does not match the second verification code, it indicates that data get lost during the transmission of the device keys and it is necessary to resend device keys to the receiving device end.

It can thus be seen that the burning method of the present invention can ensure that the device keys are successfully burnt at the receiving device end to guarantee the yield rate of the receiving device end.

It shall be pointed out that the "receiving device end" herein may be a readily-made display device or a part thereof.

The "finishing the burning method" herein refers to end of the process of burning device keys at a receiving device end. It is possible to keep on using the burning method to burn the device keys at other receiving device ends. The "device keys" herein may be HDCP device keys or other secret keys necessary for the receiving device end to receive data.

In Fig. 1, the step S101 of obtaining the first verification code is performed prior to the step S103 of sending the device keys to be sent to the receiving device end. However, those skilled in the art should understand that the step of obtaining the first verification code can also be performed simultaneously with the step S103 of sending the device keys to be sent to the receiving device end, or the step S103 of sending the device keys to be sent to the receiving device end can be performed prior to the step S101 of obtaining the first verification code.

Generally speaking, the operating device ends may be computers having computing and transmitting functions and the like, the receiving device ends may be TVs, display panels and the like, and may include chips having computing and transmitting functions. In the method for burning, there are no limitations to the devices that perform the step of comparing the first verification code with the second verification code, that is to say, the step S107 of comparing the first verification code with the second verification code can be performed at the receiving device end or at the operating device end.

For instance, in the present invention, the device keys and the first verification code can be simultaneously sent to the receiving device end, in which the first verification code is compared with the second verification code. This, however, requires that every receiving device end is configured a processing chip.

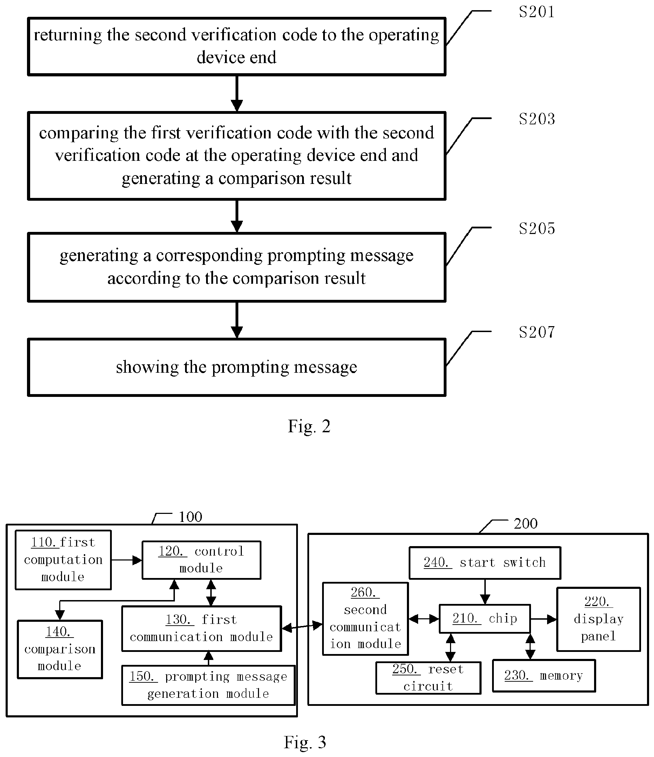

Commonly speaking, a computer device has a computing capability that is higher than that of the receiving device end. Thus, for the sake of unified management and reduced production costs, the step of comparing the first verification code with the second verification code can be preferably performed at the operating device end. Fig. 2 shows the step of comparing the first verification code with the second verification code at the operating device end. To be specific, the step of comparing the first verification code with the second verification code at the operating device end comprises:
in step D201, returning the second verification code to the operating device end;
in step S203, comparing the first verification code with the second verification code at the operating device end and generating a comparison result.

For operator's easy judgement on whether the burning is successful, the method for burning preferably further comprises: after the step of comparing the first verification code with the second verification code,
in step S205, generating a corresponding prompting message according to the comparison result.

The prompting message is then shown in the step S207. The steps S205 and S207 will be explained in detail as follows.

The present invention sets no limitations to the type of the prompting message. According to an embodiment, for example, an alerting device can be arranged at the operating device end, and the prompting message can be made into two different types of alert signals. For example, the altering device may include a red light and a green light. The prompting message indicative of successful burning may be a control signal that controls the emission of the green light, and the prompting message indicative of burning failure may be a control signal that controls the emission of the red light. Of course, the altering device may also be a device capable of sending sound signals, and the prompting message indicative of successful burning may be two different kinds of prompting sounds.

Preferably, the prompting message may be shown at the receiving device end in order to facilitate assist the operators on the production line of the receiving device ends to timely know whether the burning of device keys is successful or not. Correspondingly, after the step S205, the receiving device end is controlled to display the prompting message.

In such a case, the prompting message may be a display signal to control the receiving device end for the display. When the receiving device end displays the prompting message indicative of a successful burning, the receiving device end can be moved to the next workstation for the following step; and when the receiving device end displays the prompting message indicative of a burning failure, stop sending the receiving device end for the following step and keep the receiving device end at the current workstation for continued burning.

For easy observation, preferably, when the first verification code matches the second verification code, the prompting message is the first message (e.g., "PASS"); and when the first verification code does not match the second verification code, the prompting message is the second message different from the first message (e.g., "ERR").

The present invention does not set limitations to the types of computing the device keys to be sent at the operating device end. For instance, preferably, the computation of the device keys to be sent at the operating device end is to compute the sum of all data of the device keys to be sent, and the first verification code is a verification code sum. As stated above, the computation of the device keys to be sent at the operating device end can be identical with the computation of the received device keys at the receiving device end. Thus, if the computation of the device keys to be sent at the operating device end is summation, then the computation of the received device keys at the receiving device end is also summation, and the second verification code is a verification code sum as well, in such a manner that the computation amount can be reduced for the purpose of efficiency optimization.

Preferably, in the step S103, the received device keys are stored in the memory of the receiving device end. In the present invention, the memory can be an electrically erasable programmable read-only memory (EEPROM) or a flash memory.

Similarly, the second verification code can also be stored in the memory, and the stored address of the second verification code abuts on the stored address of the received device keys, in such a way the information can be easily extracted and used.

As another aspect of the present invention, there is provided, as shown in Fig. 3, a burning system comprising an operating device end and a receiving device end, which is used for performing the method for burning provided by the present invention, wherein the burning system comprises:
a first computation module 110 arranged at the operating device end and used for computing device keys to be sent at the operating device end to obtain a first verification code;
a control module 120 arranged at the operating device end and used for controlling the computation of the received device keys at the receiving device end to obtain a second verification code;
a first communication module 130 arranged at the operating device end and used for sending the device keys to be sent and the first control instruction to the receiving device end to be burnt; and
a comparison module 140 capable of comparing the first verification code with the second verification code and generating a comparison result, and when the comparison result indicates that the first verification code does not match the second verification code, the comparison module 140 sending a reset signal to the control module 120 which generates a reset instruction according to the reset signal so as to control the first communication module 130 to send the device keys again to the receiving device end 200.

As stated above, if the first verification code matches the second verification code, it indicates that the device keys are burnt at the receiving device end 200 correctly; and if the first verification code does not match the second verification code, it indicates that data gets lost during the transmission of the device keys and must be retransmitted.

It can thus be seen that the burning method performed by the burning system of the present invention can ensure that the device keys are successfully burnt at the receiving device end to guarantee the yield rate of the receiving device end.

In the present invention, the control module 120, the first computation module 110 and the first communication module 130 are all arranged at the operating device end to form as a part of the operating device end 100.

The comparison module 140 can be arranged at either the operating device end or the receiving device end. In the implementatin as shown in Fig. 3, the comparison module 140 is arranged at the operating device end, and the receiving device end 200 returns the second verification code to the operating device end 100 for comparison. When the comparison module 140 is arranged at the receiving device end 200, the operating device end 100 returns to the first verification code to the operating device end 100 for comparison.

How to control the received device keys by the control module 120 at the receiving device end will be explained in detail: in a first embodiment, the control module 120 can generate a first control instruction, the first communication module 130 can send the first control instruction to the receiving device end 200, and the first control instruction can control a chip 210 to compute the received device keys to obtain the second verification code; in the second implementation, the control module can generate an operating instruction, the first communication module 130 can send the operating instruction to the receiving device end 200, and then the chip 210 of the receiving device end 200 can generate the first control instruction under the control of the operating instruction.

For operator's easy judgement on whether the burning is successful, the method for burning may preferably also comprise a prompting message generation module 150, and the control module 120 can control the prompting message generation module 150 to generate prompting messages according to the comparison result.

As stated above, the present invention sets no limitations to the types of prompting messages. For instance, an alerting device can be arranged at the operating device end, and the prompting message can be made into two different types of alert signals. For example, the altering device may include a red light and a green light. The prompting message indicative of successful burning may be a control signal that controls the emission of the green light, and the prompting message indicative of burning failure may be a control signal that controls the emission of the red light. Of course, the altering device may also be a device capable of sending sound signals, and the prompting message indicative of successful burning may be two different kinds of prompting sounds.

Preferably, the prompting message may be shown at the receiving device end in order to facilitate the operators on the production line of the receiving device ends to know whether the burning of device keys is successful or not. Correspondingly, the prompting message generation module 150 is arranged at the operating device end. When the prompting message generation module 150 generates the prompting message, the control module 120 can generate the second control instruction to control the receiving device end to show a corresponding prompting message, and the first communication module 130 can send the prompting message and the second control instruction to the chip 210 of the receiving device end 200.

As shown in Fig. 3, the receiving device end 200 comprises a display panel 220, and when the chip 210 receives the prompting message and the second control instruction, it can control the display panel 220 for display. The present invention sets no limitations to the specific type of the display panel 220. For example, the display panel 220 may be a liquid crystal display panel or an organic light-emitting diode display panel. In addition to the chip 210 and the display panel 220, the receiving device end 200 further comprises a second communication module 260 for communication with the operating device end 100, wherein the second communication module 260 communicates with the first communication module 130.

As stated above, when the first verification code matches the second verification code, the prompting message is the first message (e.g., "PASS"); and when the first verification code does not match the second verification code, the prompting message is the second message different from the first message (e.g., "ERR").

As stated above, the computation of the device keys by the first computation module is to compute the sum of all data of the device keys, and the first verification code is a verification code sum.

It can be easily understood that the chip 210 comprises a second computation module for computing the received device keys. Preferably, the second computation module can perform the same computation as the first computation module 110 (e.g., summation).

The receiving device end 200 further comprises a memory 230. When the chip of the receiving device end receives the data of the operating device end 100 (including the device keys, the first control instruction, the second control instruction, display information and the second verification code, etc.), the data is stored in the memory 230, wherein the memory address of the second verification code abuts on the memory address of the received device keys. As stated above, the memory 230 may be an electrically erasable programmable read-only memory (EEPROM) or a flash memory. The receiving device end may further include a start switch 240 for sending a start instruction to the chip and a reset circuit 250 for providing a reset instruction to the chip in the event of burning failure.

In the present invention, the operating device end 100 communicates with the receiving device end 200 through the first communication module 130 and the second communication module 260, which may be serial ports. As an implementation of the present invention, the serial port may be RS232 serial port. It can be understood that the above implementations are exemplary for illustration of the principle of the present invention; however, the present invention is not limited thereto. As far as those ordinarily skilled in the art are concerned, various variations and improvements can be made without departing from the spirit and nature of the present invention and shall be deemed as falling within the protection scope of the present invention.

## Claims

1. A method for burning device keys, **characterized in that** the method for burning comprises the steps of:
step a: computing device keys to be sent at an operating device end to obtain a first verification code;
step b: sending the device keys to be sent to a receiving device end, and controlling the receiving device end to store the received device keys into the receiving device end;
step c: controlling the receiving device end to compute the received device keys to obtain a second verification code;
step d: comparing the first verification code with the second verification code;
step e: finishing the burning method when the first verification code matches the second verification code, and performing the steps b, c, d and e again when the first verification code does not match the second verification code.

2. The method for burning according to claim 1, **characterized in that** the step d further comprises the steps of
returning the second verification code to the operating device end;
comparing the first verification code with the second verification code at the operating device end and generating a comparison result.

3. The method for burning according to claim 1, **characterized in that** the step d further comprises the steps of
returning the first verification code to the receiving device end;
comparing the first verification code with the second verification code at the receiving device end and generating a comparison result.

4. The method for burning according to claim 1, **characterized in that** the computation of the device keys to be sent at the operating device end is identical with the computation of the received device keys at the receiving device end.

5. The method for burning according to claim 1, **characterized in that** the computation of the device keys to be sent at the operating device end is different from the computation of the received device keys at the receiving device end.

6. The method for burning according to claim 1, **characterized by** further comprising the step of
generating a corresponding prompting message according to the comparison result.

7. The method for burning according to claim 6, **characterized by** further comprising the step of
showing the prompting message by the operating device end or the receiving device end.

8. The method for burning according to claim 6 or 7, **characterized in that** when the first verification code matches the second verification code, the prompting message is the first message; and when the first verification code does not match the second verification code, the prompting message is the second message different from the first message.

9. The method for burning according to claim 1, **characterized in that** the computation of the device keys to be sent at the operating device end is to compute the sum of all data of the device keys to be sent, and the first verification code is a verification code sum.

10. The method for burning according to claim 1, **characterized in that** in the step b, the received device keys are stored in the memory of the receiving device end.

11. The method for burning according to claim 10, **characterized in that** the second verification code can be stored in the memory, and the stored address of the second verification code abuts on the stored address of the received device keys.

12. The method for burning according to claim 1, **characterized in that** the receiving device end comprises a display device.

13. The method for burning according to claim 1, **characterized in that** the device keys are HDCP (High-bandwidth Digital Content Protection) device keys.

14. A burning system including an operating device end and a receiving device end and used for burning device keys at the receiving device end, **characterized in that** the burning system comprises:
a first computation module arranged at the operating device end and used for computing device keys to be sent to obtain a first verification code;
a control module arranged at the operating device end and used for controlling the computation of the received device keys at the receiving device end to obtain a second verification code;
a first communication module arranged at the operating device end and used for sending the device keys to be sent to the receiving device end to be burnt; and
a comparison module capable of comparing the first verification code with the second verification code and generating a comparison result, and when the comparison result indicates that the first verification code does not match the second verification code, the comparison module sending a reset signal to the control module which generates a reset instruction according to the reset signal so as to control the first communication module to send the device keys again to the receiving device end.

15. The burning system according to claim 14, **characterized in that** the control module can generate a first control instruction, the first communication module can send the first control instruction to the receiving device end, and the first control instruction can control the receiving device end to compute the received device keys to obtain the second verification code.

16. The burning system according to claim 14, **characterized in that** the comparison module is arranged at the operating device end, and the receiving device end returns the second verification code to the operating device end for comparison.

17. The burning system according to claim 14, **characterized in that** the comparison module is arranged at the receiving device end, and the operating device end returns the first verification code to the operating device end for comparison.

18. The burning system according to claim 14, **characterized in that** the burning system further comprises a prompting message generation module, and the control module can control the prompting message generation module to generate prompting messages according to the comparison result.

19. The burning system according to claim 18, **characterized in that** the prompting message generation module is arranged at the operating device end, and when the prompting message generation module generates the prompting message, the control module can generate the second control instruction to control the receiving device end to show a corresponding prompting message, and the first communication module can send the prompting message and the second control instruction to the receiving device end.

20. The burning system according to claim 18 or 19, **characterized in that** when the first verification code matches the second verification code, the prompting message is the first message; and when the first verification code does not match the second verification code, the prompting message is the second message different from the first message.

21. The burning system according to claim 14, **characterized in that** the computation of the device keys to be sent at the operating device end is identical with the computation of the received device keys at the receiving device end.

22. The burning system according to claim 14, **characterized in that** the computation of the device keys to be sent at the operating device end is different from the computation of the received device keys at the receiving device end.

23. The burning system according to claim 14, **characterized in that** the computation of the device keys by the first computation module is to compute the sum of all data of the device keys, and the first verification code is a verification code sum.

24. The burning system according to claim 14, **characterized in that** the receiving device end further comprises a memory for storing the received device keys.

25. The burning system according to claim 24, **characterized in that** the memory is also used to store the second verification code, and the stored address of the second verification code abuts on the stored address of the received device keys.

26. The burning system according to claim 14, **characterized in that** the receiving device end comprises a display device.

27. The burning system according to claim 14, **characterized in that** the device keys are HDCP (High-bandwidth Digital Content Protection) device keys.
